**Europäisches Patentamt**

**European Patent Office**

**Office européen des brevets**

(19)

(11) **EP 0 965 996 A1**

(12) **EUROPEAN PATENT APPLICATION**

(43) Date of publication:
**22.12.1999 Bulletin 1999/51**

(51) Int Cl.$^6$: **G21C 3/32**, C22C 38/40

(21) Application number: **98110987.9**

(22) Date of filing: **16.06.1998**

(84) Designated Contracting States:
**AT BE CH CY DE DK ES FI FR GB GR IE IT LI LU MC NL PT SE**
Designated Extension States:
**AL LT LV MK RO SI**

(71) Applicants:
- **MITSUBISHI MATERIALS CORPORATION**
  **Chiyoda-ku, Tokyo (JP)**
- **Mitsubishi Heavy Industries, Ltd.**
  **Tokyo 100-0005 (JP)**
- **Mitsubishi Nuclear Fuel Co., Ltd.**
  **Naka-gun, Ibaraki-ken (JP)**

(72) Inventors:
- **Miyai, Junichi, c/o Mitsubishi Materials Corp.**
  **Okegawa-shi, Saitama-ken (JP)**

- **Ito, Kenji, c/o Mitsubishi Materials Corp.**
  **Okegawa-shi, Saitama-ken (JP)**
- **Suzuki, Shigemitsu, Mitsubishi Heavy Ind., Ltd.**
  **Hyogo-ku, Kobe-shi, Hyogo-ken (JP)**
- **Harada, Hidenori, Mitsubishi Heavy Ind., Ltd.**
  **Hyogo-ku, Kobe-shi, Hyogo-ken (JP)**
- **Koga, Atsushi**
  **Tokai-mura, Naka-gun, Ibaraki-ken (JP)**
- **Kadono, Hiroaki**
  **Tokai-mura, Naka-gun, Ibaraki-ken (JP)**

(74) Representative: **Kügele, Bernhard et al**
**NOVAPAT INTERNATIONAL SA,**
**9, Rue du Valais**
**1202 Genève (CH)**

(54) **Fuel assembly nozzle**

(57)    There is provided a fuel assembly nozzle in which the cost is reduced while the strength standard is met. In the fuel assembly nozzle disposed at the upper and lower parts of a fuel assembly for a light water reactor, at least a pad plate 15B, which is a principal portion, is configured by a precision casting of stainless steel, and the δ ferrite content of the precision casting is set so that 3% ≤ δ ferrite content ≤ 13%.

F I G. 1C

**Description**

BACKGROUND OF THE INVENTION

1. Field of the Invention

The present invention relates to a fuel assembly nozzle for a light water reactor.

2. Description of the Related Art

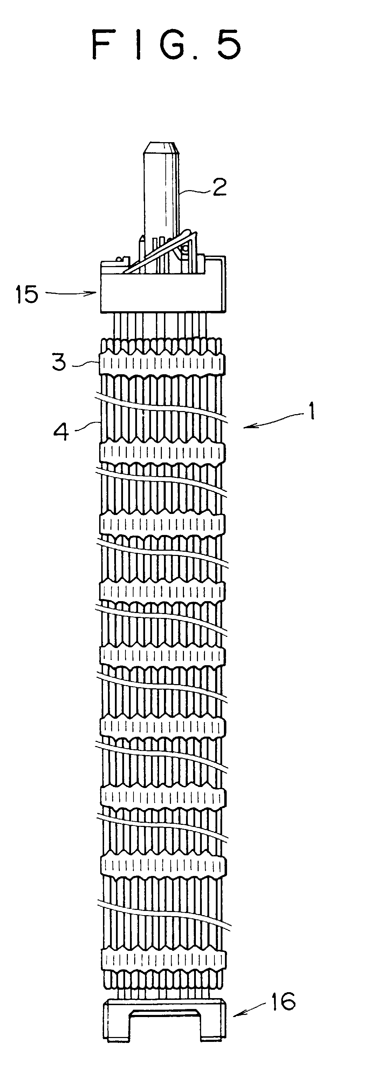

As shown in FIG. 5, a fuel assembly 1 for a light water reactor forms a skeleton by using a guide thimble (not shown) for a control rod cluster 2, one in-pile instrumentation guide thimble (not shown), and nine support lattices 3 joined to these elements. After fuel rods 4 are inserted in the cells of the support lattices 3, an upper nozzle 15 and a lower nozzle 16 are installed, by which assembly is completed. The main functions of the upper nozzle 15 and the lower nozzle 16 are the positioning of the fuel assembly 1 in a core, the security of cooling water passage, and the formation of structure of the fuel assembly 1.

Conventionally, the upper nozzle 15 and the lower nozzle 16 have been manufactured by welding and machining a rolled material of stainless steel (SUS304 material).

However, if the nozzle 15, 16 is formed of a forging, the number of divided parts is large, and the cost is high. Therefore, it is thought that the nozzle is formed of a precision casting. However, when the nozzle is manufactured merely by casting a commercially available SUS304 material ($\delta$ ferrite content: 2%), there arises a problem in that the strength becomes insufficient, and the standard of proof stress ($\geq$ 21 kgf) cannot be met in the normal-temperature tensile test.

SUMMARY OF THE INVENTION

The present invention was made in view of the above situation, and accordingly an object thereof is to provide a fuel assembly nozzle in which the cost can be reduced while a strength not lower than the specified value is maintained.

According to the invention defined in claim 1, in a fuel assembly nozzle disposed at the upper and lower parts of a fuel assembly for a light water reactor, at least a principal portion is configured by a precision casting of stainless steel, and the $\delta$ ferrite content of the precision casting is set so that 3% $\leq$ $\delta$ ferrite content $\leq$ 13%. The reason of setting the upper limit of $\delta$ ferrite 13% is as follows. To increase the $\delta$ ferrite content leads to enhancing a strength of material. On the other hand, to increase the $\delta$ ferrite content excessively leads to embrittlement of material.

According to the invention defined in claim 2, in claim 1, the principal portion configured by a precision casting and a portion other than the principal portion are integrated with each other by welding. Although the principal portion and the portion other than the principal portion are divided arbitrarily from each other, the range that is easily cast is manufactured by casting and the range that is easily machined is manufactured by machining in consideration of the workability. After each part is manufactured, the two parts are integrated with each other by welding, and finally machining is further performed to complete a nozzle.

As described above, in the fuel assembly nozzle in accordance with the present invention, since the principal portion is configured by a precision casting, the manufacturing cost can be reduced as compared with the case where it is configured by a forging. Also, since the composition is controlled so that especially the $\delta$ ferrite content of the precision casting is in the predetermined range, a strength exceeding the standard can be achieved, and consequently the manufacture of nozzle by casting can be made possible.

BRIEF DESCRIPTION OF THE DRAWINGS

FIG. 1 is a view showing a manufacturing process for obtaining a nozzle in accordance with one embodiment of the present invention;
FIG. 2 is a view showing a process for manufacturing a pad plate, which is a principal portion of a nozzle in accordance with one embodiment of the present invention, by the precision casting method;
FIG. 3 is a characteristic diagram showing a relationship between $\delta$ ferrite content and proof stress of a precision casting;
FIG. 4 is a characteristic diagram showing a relationship between $\delta$ ferrite content and (Cr/Ni); and
FIG. 5 is a view showing a configuration of fuel assembly for a light water reactor.

DETAILED DESCRIPTION OF PREFERRED EMBODIMENTS

An embodiment of the present invention will be described below with reference to the accompanying drawings.

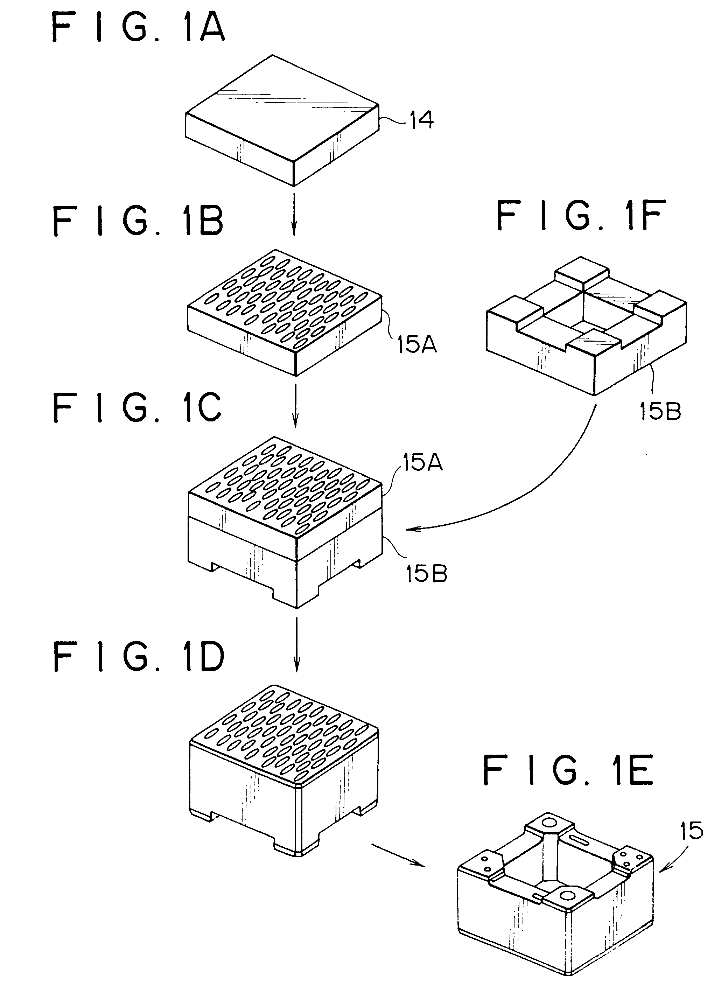

FIG. 1 is a view showing a manufacturing process for an upper nozzle in accordance with one embodiment of the present invention. This upper nozzle 15 is completed by integrating an adapter plate (a portion other than a principal portion) 15A, which is a machined part, and a pad plate (a principal portion) 15B, which is a precision casting, by welding, and by further machining the integrated part.

Both of the adapter plate 15A and the pad plate 15B are made of stainless steel (for example, SUS304 material), and the adapter plate 15A is manufactured by machining as follows: First, (a) a rolled material 14 of SUS304 is cut into a hexahedron. Next, (b) prepared holes are formed and also welding grooves are formed. Thus, the adapter plate 15A is obtained.

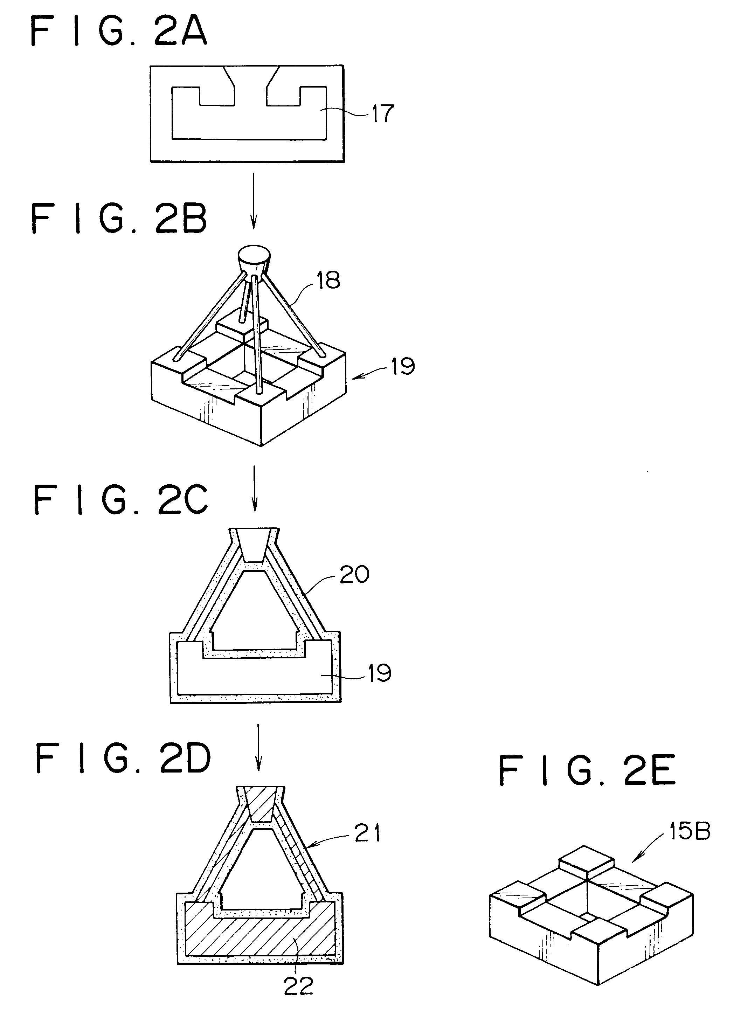

Meanwhile, the pad plate 15B shown in FIG. 1(f) is manufactured by the precision casting method as shown in FIG. 2. First, (a) wax 17 is injection molded. Next, (b) a gate is installed and wax mold 19 is assembled, and (c) coating is applied to the assembled wax mold 19, and sanding is performed. By repeating the coating and sanding operations, a coat 20 is made thick, and dewaxing is performed by firing. Then, (d) molten metal 22 of stainless steel is poured into a casting mold 21 thus obtained, and shaking-out, cutting, and finishing are performed sequentially after curing. Thus, (e) the pad plate 15B, which is a precision casting, is obtained.

In this casting process, the composition is controlled to within the standard range of SCS13A (cast material of SUS304), and the δ ferrite content is increased as compared with the normal value to enhance the strength of casting.

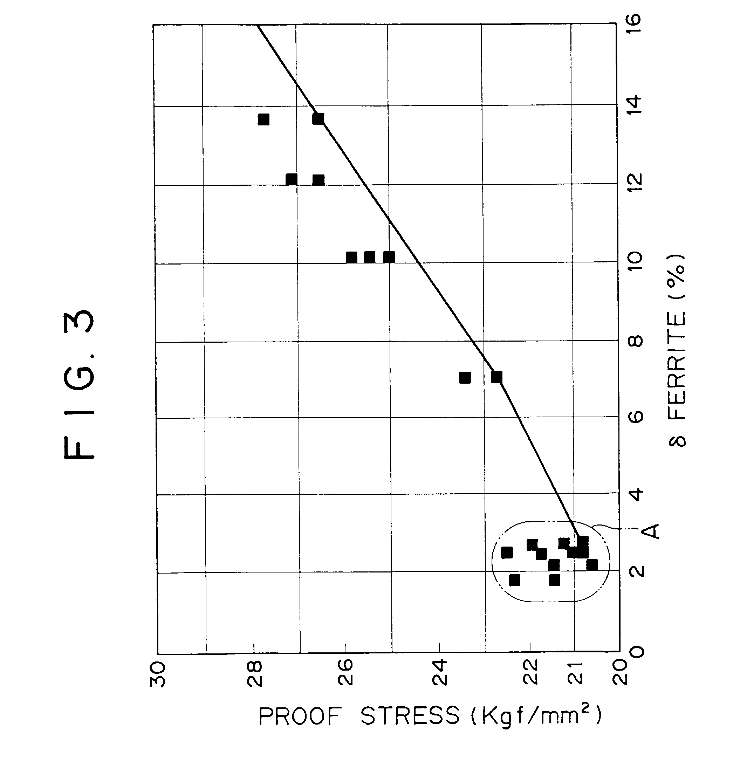

FIG. 3 shows a relationship between δ ferrite content and proof stress. It can be seen from the figure that if the δ ferrite content is set at 3% or more, the proof stress standard ($\geq$ 21 kgf/mm$^2$) is met. Also, if the δ ferrite content is increased excessively, problems may arise in terms of the heat in the reactor and the embrittlement caused by neutron irradiation. As a result of thermal embrittlement test, it was found that the δ ferrite content should preferably be 13% or less. Incidentally, the δ ferrite content in a casting is at the level of test pieces indicated by A in FIG. 3.

The δ ferrite content is determined by using a publicly known formula and a characteristic diagram as described below.

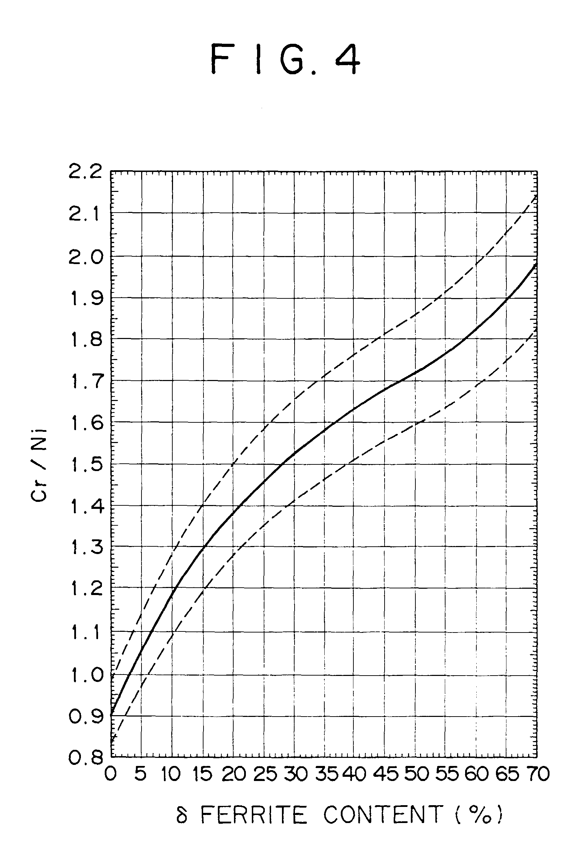

Specifically, the δ ferrite content can be determined by Cre/Nie using a characteristic diagram shown in FIG. 4. Here, Cre/Nie is obtained by the following publicly known formula.

$$[Cr(\%) + 1.5Si(\%) + 1.4Mo(\%) + Nb(\%) - 4.99] / [Ni(\%) +$$

$$30C(\%) + 0.5Mn(\%) + 26(N-0.02\%) + 2.77] = Cre/Nie$$

Therefore, by calculating Cre/Nie from the composition, the δ ferrite content can be obtained using FIG. 4. By controlling the composition so that this value is such that 3% $\leq$ δ ferrite content $\leq$ 13%, a precision casting having a desired strength above the standard can be obtained. It can be seen from the above formula that the δ ferrite content can be controlled to the increase side, for example, by increasing Cr and Si and decreasing Ni, C and Mn.

The composition of a precision cast tested product is given in Table 1, in which the cases of 10% δ ferrite and 13% δ ferrite are shown.

Table 1

| Elements | Standard | Delta ferrite 10% | | Delta ferrite 13% | |
|---|---|---|---|---|---|
| | | No.1 | No.2 | No.1 | No.2 |
| C | ≤0.08 | 0.07 | 0.06 | 0.05 | 0.05 |
| Si | ≤2.00 | 1.46 | 1.50 | 1.62 | 1.59 |
| Mn | ≤1.50 | 0.86 | 0.90 | 0.92 | 0.89 |
| P | ≤0.04 | 0.02 | 0.02 | 0.02 | 0.02 |
| S | ≤0.04 | 0.01 | 0.01 | 0.01 | 0.01 |
| Ni | 8.00-11.00 | 9.08 | 9.08 | 8.48 | 8.52 |
| Cr | 18.00-20.00 | 20.06 | 20.17 | 20.57 | 20.48 |
| N | -- | 0.03 | 0.04 | 0.06 | 0.06 |
| Mo | -- | 0.10 | 0.09 | 0.07 | 0.07 |

Table 1  (continued)

| Elements | Standard | Delta ferrite 10% | | Delta ferrite 13% | |
|---|---|---|---|---|---|
| | | No.1 | No.2 | No.1 | No.2 |
| Nb | -- | 0.02 | 0.02 | 0.02 | 0.02 |

After the pad plate 15B is manufactured by precision casting as described above, as shown in FIG. 1(c) the pad plate 15B and the machined adapter plate 15A are integrated with each other by welding. Then, as shown in FIG. 1(d), machining is further performed, and finally beads-treatment, cleaning, and final inspection are performed to obtain the product of upper nozzle 15.

As described above, since the pad plate 15B, which is the principal portion, is configured by a precision casting, the manufacturing cost can be reduced significantly as compared with the case where it is configured by a conventional forging. Also, by increasing the $\delta$ ferrite content, the strength can be made to have a value satisfactorily meeting the standard.

Although only the pad plate 15B is configured by a precision casting in the above-described embodiment, all of the structure including the adapter plate may be configured by a precision casting. The ranges of precision cast portion and machined portion can be determined arbitrarily according to the complexity of shape and so on.

Also, although the case of the upper nozzle 15 is shown in the above-described embodiment, the lower nozzle 16 can also be manufactured in the same way.

## Claims

1.   A fuel assembly nozzle disposed at the upper and lower parts of a fuel assembly for a light water reactor, in which at least a principal portion is configured by a precision casting of stainless steel, and the $\delta$ ferrite content of said precision casting is set so that 3% $\leq$ $\delta$ ferrite content $\leq$ 13%.

2.   A fuel assembly nozzle according to claim 1, wherein said principal portion configured by a precision casting and a portion other than said principal portion are integrated with each other by welding.

3.   A fuel assembly nozzle according to claim 1, wherein said nozzle consists of a principal portion and a portion other than the principal portion, said principal portion being a pad plate, and said portion other than the principal portion being an adapter plate.

F I G. 1A

14

F I G. 1B

F I G. 1F

15A

15B

F I G. 1C

15A

15B

F I G. 1D

F I G. 1E

15

FIG. 2A

17

FIG. 2B

18

19

FIG. 2C

20

19

FIG. 2D

21

22

FIG. 2E

15B

F I G. 3

# F I G. 4

# F I G. 5

**European Patent Office**

**EUROPEAN SEARCH REPORT**

Application Number

EP 98 11 0987

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| E | DATABASE WPI<br>Week 9838<br>Derwent Publications Ltd., London, GB;<br>AN 98-442891<br>XP002085338<br>& JP 10 186072 A (MITSUBISHI JUKOGUO KK ET AL), 14 July 1998<br>* abstract * | 1-3 | G21C3/32<br>C22C38/40 |
| A | US 5 283 812 A (VERDIER) 1 February 1994<br>* column 3, line 5 - column 4, line 5 * | 1-3 | |
| A | US 4 427 624 A (MARLATT ET AL.)<br>24 January 1984<br>* column 2, line 57-64 * | 1-3 | |
| A | EP 0 447 109 A (HITACHI, LTD)<br>18 September 1991<br>* page 3, line 1-8 *<br>* page 4, line 3-9 *<br>* page 6, line 13-16 * | 1 | TECHNICAL FIELDS SEARCHED (Int.Cl.6)<br><br>G21C<br>C22C |

The present search report has been drawn up for all claims

| Place of search | Date of completion of the search | Examiner |
|---|---|---|
| MUNICH | 23 November 1998 | Frisch, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

FPO FORM 1503 03 82 (P04C01)

## ANNEX TO THE EUROPEAN SEARCH REPORT
## ON EUROPEAN PATENT APPLICATION NO.

EP 98 11 0987

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-1998

| Patent document cited in search report | | Publication date | Patent family member(s) | | | Publication date |
|---|---|---|---|---|---|---|
| US 5283812 | A | 01-02-1994 | FR | 2682213 | A | 09-04-1993 |
| | | | CN | 1071528 | A,B | 28-04-1993 |
| | | | CZ | 282901 | B | 12-11-1997 |
| | | | DE | 9218744 | U | 08-06-1995 |
| | | | DE | 69209429 | D | 02-05-1996 |
| | | | DE | 69209429 | T | 14-08-1996 |
| | | | EP | 0537044 | A | 14-04-1993 |
| | | | ES | 2086690 | T | 01-07-1996 |
| | | | JP | 5209977 | A | 20-08-1993 |
| | | | SK | 302592 | A | 08-03-1995 |
| | | | ZA | 9207590 | A | 05-04-1994 |
| US 4427624 | A | 24-01-1984 | BE | 892324 | A | 01-09-1982 |
| | | | FR | 2500947 | A | 03-09-1982 |
| | | | JP | 1517682 | C | 07-09-1989 |
| | | | JP | 57157182 | A | 28-09-1982 |
| | | | JP | 63067871 | B | 27-12-1988 |
| EP 447109 | A | 18-09-1991 | JP | 2574917 | B | 22-01-1997 |
| | | | JP | 3264651 | A | 25-11-1991 |
| | | | DE | 69126902 | D | 04-09-1997 |
| | | | DE | 69126902 | T | 29-01-1998 |
| | | | KR | 9506274 | B | 13-06-1995 |
| | | | US | 5203932 | A | 20-04-1993 |

EPO FORM P0459

For more details about this annex : see Official Journal of the European Patent Office, No. 12/82